# EUROPEAN PATENT APPLICATION

(11) **EP 3 798 040 A1**
(43) Date of publication of application: **31.03.2021**
(21) Application number: 20198365.7
(22) Date of filing: 25.09.2020
(51) Int. Cl.: B60L 3/00, A62C 3/07, A62C 3/16, A62C 99/00, B60L 58/26, B65D 81/38, H01M 50/24, H01M 10/613, H02J 7/00, B60L 50/64

(54) **BATTERY PACK FOR AN ELECTRIC VEHICLE PROVIDED WITH A SAFETY SYSTEM FOR THERMAL RUNAWAY**

(30) Priority: 25.09.2019 IT 201900017213
(71) Applicant: Iveco S.p.A., 10156 Torino (IT)
(72) Inventor: AIMO BOOT, Marco, 10072 Caselle Torinese (TO) (IT); SANTORO, Francesco, 10136 Torino (IT)
(74) Representative: Faraldi, Marco

(57) **Abstract**

A battery pack (1) for a vehicle comprising a supporting structure (3), which is configured to define one or more housings (4) for one or more respective electric batteries, and a casing, which encloses the supporting structure (3) and the batteries and isolates them from the outside, said battery pack (1) further comprising a safety system (2), which is configured to introduce a gas inert to combustion into the battery pack (1) when a pre-set threshold temperature is exceeded in the battery pack (1).

## Description

### CROSS-REFERENCE TO RELATED APPLICATIONS

This patent application claims priority from Italian patent application no. 102019000017213 filed on 25/09/2019.

### TECHNICAL FIELD

The invention relates to a battery pack for an electric vehicle, in particular to a battery pack provided with a safety system for the thermal runaway phenomenon.

### KNOWN STATE OF THE ART

As it is known, electric vehicles comprise battery packs configured to supply a sufficient amount of power needed for the drive of the vehicle and for the operation of other auxiliary comfort devices, such as the air conditioning system, or functional devices, such as screens to display information that can be useful for the passengers.

As it is known, the electric batteries used in these vehicles are electrochemical storage devices, which, during use, while they are being charged and as the charge depletes, tend to heat up.

Following an external tampering and/or an internal fault, it is possible for the heating to reach levels that are such as to generate a phenomenon known as "thermal runaway", in which the temperature triggers exothermic reactions, which further increase the temperature, thus leading to possible disastrous consequences, such as gas emissions, explosions or fires.

In these cases, the battery pack needs to be quickly cooled down in order to prevent this condition from spreading among the inner modules or, at least, to the other adjacent batteries and in order to avoid damages that are potentially lethal for the passengers of the vehicle.

This cooling operation, which requires large quantities of fire extinguishing liquid, is normally carried out by having rescuers open the doors of the compartments housing the batteries and spray said liquid. However, this operation is long, dangerous and scarcely effective.

Therefore, security systems are needed, which are capable of precisely identifying the triggering of a thermal runway phenomenon in a battery pack of a vehicle and, as a consequence, allow operators to promptly and safely act in order to stop it.

The object of the invention is to fulfil the needs discussed above.

### SUMMARY OF THE INVENTION

The aforesaid object is reached by a battery pack for an electric vehicle provided with a safety system and by a vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a schematic perspective view, with parts removed for greater clarity, of a battery pack for a vehicle comprising a safety system according to the invention;
- Figure 2 is a perspective view of part of the safety system according to the invention;
- Figure 3 is an enlarged perspective view of a portion of the safety system of figure 2; and
- Figure 4 is a diagram showing a circuit that is part of the safety system according to the invention.

### DETAILED DESCRIPTION OF THE INVENTION

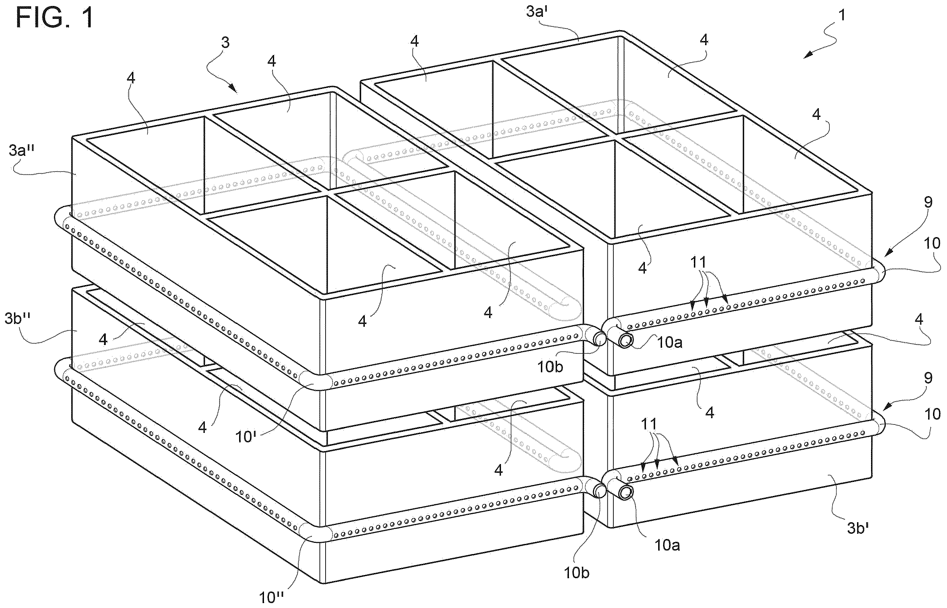

Figure 1 shows a battery pack system 1 comprising a safety system 2 according to the invention. In particular, the battery pack system 1 is part of a vehicle (not shown) with an at least partially electric drive.

In the case discussed herein, the battery pack 1 comprises a supporting structure 3, which is configured to define a plurality of housings 4, each configured to house at least one respective electric battery (not shown). Even though this is not shown, the supporting structure 3 and, hence, the housings 4 and the batteries contained therein are enclosed inside a casing, which isolates the battery pack 1 from the outside.

More in detail, in the case described herein, the supporting structure 3 comprises a right upper portion 3a', a left upper portion 3a", a right lower portion 3b' and a left lower portion 3b". Each one of the above-mentioned portions is laterally and axially separate from the other ones, so as to allow for the passage of air.

With reference to the figures, again, each portion of the structure 3 defines four housings 4 to house electric batteries. Obviously, in the battery pack 1, inside the volume delimited by the casing containing the structure 3 and the relative batteries there usually are further elements, such as cables, electric connections between the batteries and from the batteries towards the outside, all of them not being shown and discussed herein for the sake of brevity.

According to the invention, the battery pack 1 comprises a safety system 2, which is configured to inject a gas inert to combustion and with fire extinguishing features (with a thermal and/or chemical action) into the battery pack 1, when the temperature of one of the batteries of the battery pack 1 exceeds a pre-set threshold temperature.

Therefore, the safety system 2 is advantageously configured to selectively connect the battery pack 1 to a source 5 of a pressurised gas inert to combustion, depending on the temperature of the battery modules responding to it because of the physical arrangement of their parts, as mentioned above.

The aforesaid inert gas can preferably be carbon dioxide or nitrogen or any other gas deemed to be suited for the purpose, namely inert to combustion. More preferably, the threshold temperature can be a temperature ranging from 130°C to 180°C.

Owing to the above, the safety system 2 comprises sensor means 6, which are configured to identify a temperature inside the battery pack 1 at the level of each module or, alternatively, at the level of a sub-set thereof, preferably of the structure 3 or, even better, of the batteries contained in it. For example, the sensor means 6 can comprise temperature sensors, such as a thermometer or a thermocouple. The temperature measure can also come from the electronic control unit of each module, if there is one. The communication of the temperature signal to the electronic control unit 8 can be wired (hardware) or preferably by means of a CAN communication network or the like.

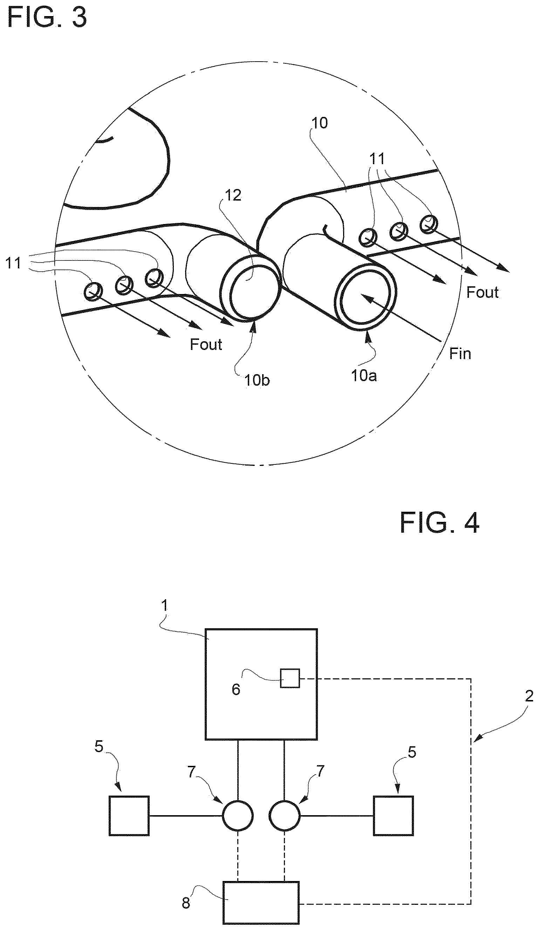

Figure 4 schematically shows the general structure of the safety system 2, in which the battery pack 1 is fluidically connected to a source 5 of a gas inert to combustion. In the case described herein, the safety system 2 comprises valve means 7, which are fluidically interposed between the battery pack 1 and the source 5 and are configured to allow or not to allow the compressed gas to flow through.

The source 5 can advantageously be located on the outside of the battery pack 1 and comprise a receptacle under pressure, such as a gas cylinder or a pressurised container.

The valve means 7 are controlled based on the temperature detected by the sensor means 6 and can preferably comprise electromechanical valves.

Hence, the safety system 2 can comprise an electronic control unit 8, which is electrically connected to the sensor means 6 and to the valve means 7 and is configured to control the operation thereof based on the values received from the sensor means 6.

In particular, the electronic control unit 8 comprises electronic processing means, which are configured to acquire data concerning the temperature inside the battery pack 1 from the sensor means 6, compare these values with a stored threshold value and operate the valve means 7 accordingly. In particular, said stored threshold value can be pre-set or change depending on some operating parameters of the vehicle, according to a map that can be stored in the electronic control unit 8.

The control unit 8 can be separate, integrated in a BMS (battery management system) or in the ECU of the vehicle.

In the case described herein, the safety system comprises, in particular, two separate and independent gas sources 5, each fluidically connected to the battery pack 1 and provided with valve means 7, which are configured to selectively allow the gas flow to flow inside the battery pack 1, as described above.

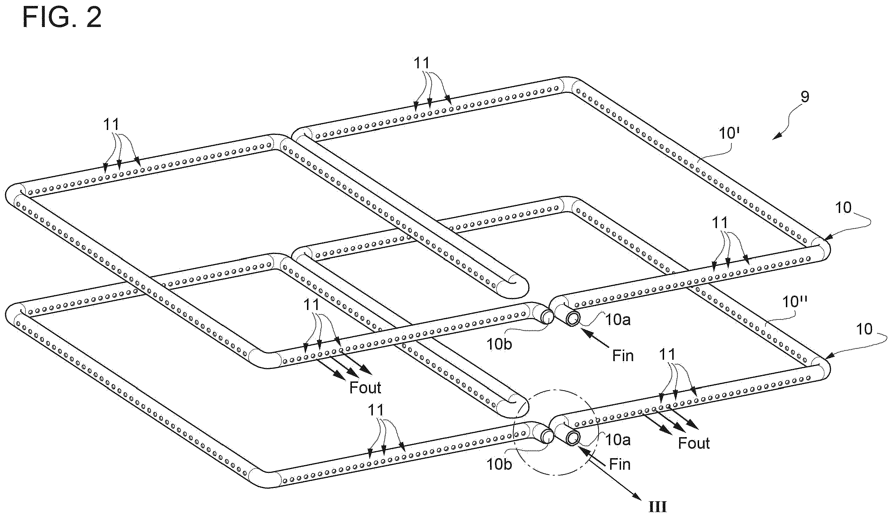

More in detail, according to figures 1 and 2, the safety system 2 comprises compressed gas distribution means 9, which are configured to support a quick and distributed diffusion of the inert gas inside the battery pack 1.

Said distribution means 9 advantageously comprise at least one piping 10 defining a distribution path for the inert gas inside the casing of the battery pack 1. Consequently, the piping 10 comprises a first end 10a, which is fluidically connected to the source 5, a second dead end 10b and a plurality of openings 11, which are obtained along the piping 10 between the first and the second end 10a, 10b and are configured to allow the compressed gas coming from the source 5 to flow out.

In the case described herein, the distribution means 9 comprise two pipings 10, precisely an upper piping 10' and a lower piping 10". More in detail, each piping 10 is configured to extend along at least part of the perimeter of the structure 3 and, hence, several batteries. In the case described herein, it preferably borders almost the entire perimeter of each portion 3a', 3a", 3b', 3b'' of the structure 3 and, hence, runs in the vicinity of each battery of the battery pack 1.

Figure 4 shows more in detail the end portions 10a, 10b of a piping 10 and the relative openings 4. The dead portion 10b is defined by means of an axial wall 12, which is manufactured as one single piece together with the piping 10 and prevents gas from flowing out of the piping 10.

According to figures 2 and 3, the openings 11 preferably have a circular shape and are equally spaced apart along the extension of the piping 10. More in detail, there are openings 11 on a right face and on a left face of the piping 10, thus defining two series of openings 11.

Obviously, even if they are not shown, the openings 11 can be provided with deflector means, which are configured to deflect the air flowing out of them.

The embodiment of the battery pack 1 comprising a safety device 2 according to the invention, as described above, works as follows.

With reference to the functional diagram of figure 4, the sensors means 6 constantly detect the temperature inside the battery pack 1 and the value is acquired by the electronic control unit 8, which compares it with a pre-set threshold value. When this value exceeds the pre-set threshold value, the electronic control unit 8 controls the valve means 7 so as to allow the compressed gas to flow from the source 5 t the battery pack 1. According to figures 2 and 3, the incoming gas flow F_{IN} flows in from the first end 10a and a partial flow F_{OUT} flows out of each opening 11. Indeed, the wall 12 prevents the gas from flowing out of the piping 10 in a direct manner and allows it to flow out of each opening 11 in a substantially uniform manner.

The compressed gas, once it has flown out of the holes 11, tends to expand, thus quickly cooling down the surroundings and, hence, cooling down the overheated area in a targeted manner. Furthermore, since it is a gas inert to combustion, it avoids the propagation of a combustion ignition.

In the light of the operation described above, the invention further relates to a fire control method for a battery pack 1 of the type described above, the method comprising the steps of:
- identifying a temperature in the battery pack 1 by means of sensor means 6;
- if the temperature is lower than a pre-set threshold value, controlling the valve means 7 so as to prevent compressed gas from flowing from the source 5 to the battery pack 1;
- in the opposite case, controlling the valve means 7 so as to allow compressed gas to flow from the source 5 to the battery pack 1.

Owing to the above, the advantages of a battery pack 1 comprising a safety device 2 according to the invention are evident.

In particular, thanks to the automatic introduction of inert gas based on a pre-set safety temperature, a source of fire can promptly be defused. Moreover, the expansion of the compressed gas, which, by so doing, absorbs heat, tends to quickly lower the temperature of the battery pack, thus reducing the chance of thermal chain reactions.

The use of valve means 7 and sensor means 6 controlled by an electronic control unit 8, as described above, allows the control of said temperature to be carried out in an economic fashion and to be integrated in the already existing battery/vehicle management system module.

The electronic control unit 8 also allows the successful operation of the solenoid valves 7 to be communicated to the driver through the on-board communication network (CAN network or the like) in order to start evacuating the vehicle due to the high risk of fire. A similar information can be transmitted, through a wireless communication channel, to a remote control centre for different purposes, first of all that of activating rescues.

The use of distribution means 9 to distribute the gas inside the battery pack 1 allows the gas distribution to be uniform, so as to defuse/lower the temperature in any point of the battery pack 1.

Because the source 5 is located on the outside of the battery pack 1, the dimensions of the latter can be small and, if necessary, the safety system 2 can be integrated in another gas circuit of the vehicle. In this case, carbon dioxide is particularly economic and can also be used in other circuits of the vehicle.

Furthermore, the use of two or more independent sources of gas under pressure ensures, in case of correct operation, a quick cooling and a fast suppression of a fire. In case of fault or wear of one of the two sources 5 or of the relative valve means 7, the cooling and the suppression can anyway take place thanks to the remaining source and valve means 7. Therefore, the system is redundant and safe.

Finally, the battery pack 1 comprising a safety device 2 according to the invention can be subjected to changes and variants, which, though, do not go beyond the scope of protection set forth in the appended claims.

The shape of the battery pack 1 described above can clearly be changed based on the type and size of the vehicle, as well as depending on the number of batteries to be accommodated. Hence, the structure 3 and the housings 4 can be different in terms of shape and number.

Similarly, the gas source 5 can be manufactured singularly or inside the battery pack, though increasing the dimensions thereof.

Furthermore, the shape and number of the distribution means 2 and of the openings 11, the type of valve means 7 or of sensor means 6 can be different, provided that they maintain the same function.

## Claims

1. A battery pack (1) for a vehicle, said battery pack (1) comprising a supporting structure (3) configured to define one or more housings (4) and one or more respective electric batteries, said battery pack (1) also comprising a casing enclosing said supporting structure (3) and said batteries and isolating them from the external environment, said battery pack (1) also comprising a safety system (2) configured to emit a gas inert to combustion within the battery pack (1) when a pre-set threshold temperature is exceeded in said battery pack (1).

2. The battery pack according to claim 1, further comprising sensor means (6) configured to monitor the temperature in said battery pack (1).

3. The battery pack according to claim 2, further comprising valve means (7) configured to enable the passage of gas in said battery pack (1) from a source (5) of pressurised gas.

4. The battery pack according to claim 3, wherein said source (5) is a container for pressurised gas external with respect to said battery pack (1).

5. The battery pack according to claim 3 or 4, wherein said valve means (7) comprise a mechanical or electromechanical valve.

6. The battery pack according to one of the claims from 3 to 5, further comprising an electronic unit (8) electrically connected to said sensor means (6) and to said valve means (7), said electronic unit (8) comprising electronic processing means configured to acquire a temperature value from said sensor means (6), compare it with a pre-set, stored threshold value and consequently drive said valve means (7).

7. The battery pack according to one of the preceding claims, wherein said gas inert to combustion is carbon dioxide.

8. The battery pack according to one of the claims from 3 to 7, comprising distribution means (9) of said gas, housed within said casing and configured to distribute said gas in several parts within said casing.

9. The battery pack according to claim 8, wherein said distribution means (9) comprises at least a piping (10) defining a path within said battery pack (1), said path surrounding, at least partially, one or more of said battery packs housed by said structure (3).

10. The battery pack according to claim 9, wherein said piping (10) comprises a plurality of openings made along said path.

11. The battery pack according to claim 10, wherein said plurality of openings are obtained on opposite sides of said piping (10).

12. The battery pack according to claim 10, wherein said plurality of openings are equally spaced apart from one another along said piping.

13. A fire control method for a battery pack (1) according to one of the preceding claims comprising the steps of:
- identifying in said battery pack (1) by sensor means (6) ;
- if said temperature is lower than a pre-set threshold temperature, controlling said valve means (7) to prevent the passage of gas compressed by said source (5) in said battery pack (1);
- in the opposite case, controlling said valve means (7) to enable the passage of gas compressed by said source (5) within said battery pack.

14. A vehicle comprising a battery pack according to any one of the preceding claims.
